**Europäisches Patentamt**

(19) **European Patent Office**

**Office européen des brevets**

(11) Numéro de publication: **0 113 289**
**A1**

# (12) DEMANDE DE BREVET EUROPEEN

(21) Numéro de dépôt: 83402515.7

(22) Date de dépôt: 22.12.83

(51) Int. Cl.³: **F 25 D 3/10**
**F 16 C 3/08**
**//G01R33/12**

(30) Priorité: 28.12.82 FR 8221893

(43) Date de publication de la demande:
11.07.84 Bulletin 84/28

(84) Etats contractants désignés:
CH DE FR GB LI NL

(71) Demandeur: COMMISSARIAT A L'ENERGIE ATOMIQUE
Etablissement de Caractère Scientifique Technique et
Industriel
31/33, rue de la Fédération
F-75015 Paris(FR)

(72) Inventeur: Chiron, Guy
Les Cèdres
F-38610 Gieres(FR)

(72) Inventeur: Dewanckel, Bernard
46, Chemin de Rochasson
F-38240 Meylan(FR)

(72) Inventeur: Locatelli, Marcel
33, Hameau Fleuri Montbonnot-Saint Martin
F-38330 Saint Ismier(FR)

(72) Inventeur: Pocachard, Jacques
429, rue Berlioz Le Chevallon
F-38340 Voreppe(FR)

(74) Mandataire: Mongrédien, André et al,
c/o BREVATOME 25, rue de Ponthieu
F-75008 Paris(FR)

(54) Procédé et appareil de mise à basse température d'un dispositif, notamment à environ 4K.

(57) La présente invention a pour objet un procédé et un
appareil pour la mise à basse température d'un dispositif (6)
placé dans un cryostat (20).

Selon l'invention, on met le dispositif (6), à la demande
et pendant un temps déterminé, en contact avec un gaz
liquéfié provenant d'une source (16) et, après utilisation, on
fait retourner le gaz liquéfié dans ladite source (16).

Application à la mesure d'aimantation rémanente
d'échantillons de roches.

FIG. 2

Procédé et appareil de mise à basse température d'un dispositif, notamment à environ 4K.

La présente invention a pour objet un procédé de mise et de maintien, à la demande, d'un dispositif quelconque (physique, électronique, de mesure...) à basse température ainsi qu'un appareil pour la mise en oeuvre de ce procédé.

En effet, un certain nombre de dispositifs soit de mesure comme les magnétomètres SQUID, soit électroniques comme les bobines supraconductrices, demandent pour fonctionner des basses températures, ce qui entraîne l'utilisation de gaz liquéfiés et plus particulièrement de l'hélium liquide. L'hélium liquide est généralement enfermé dans un cryostat qui permet de limiter son évaporation et l'on cherche à donner une durée de vie maximale à cette réserve afin d'assurer une autonomie maximale au dispositif et de limiter le plus possible la consommation d'hélium liquide, qui est un produit cher. Les dispositifs utilisés actuellement sont des cryostats assurant deux fonctions, à savoir le stockage de la réserve totale d'hélium et le maintien à très basse température du dispositif.

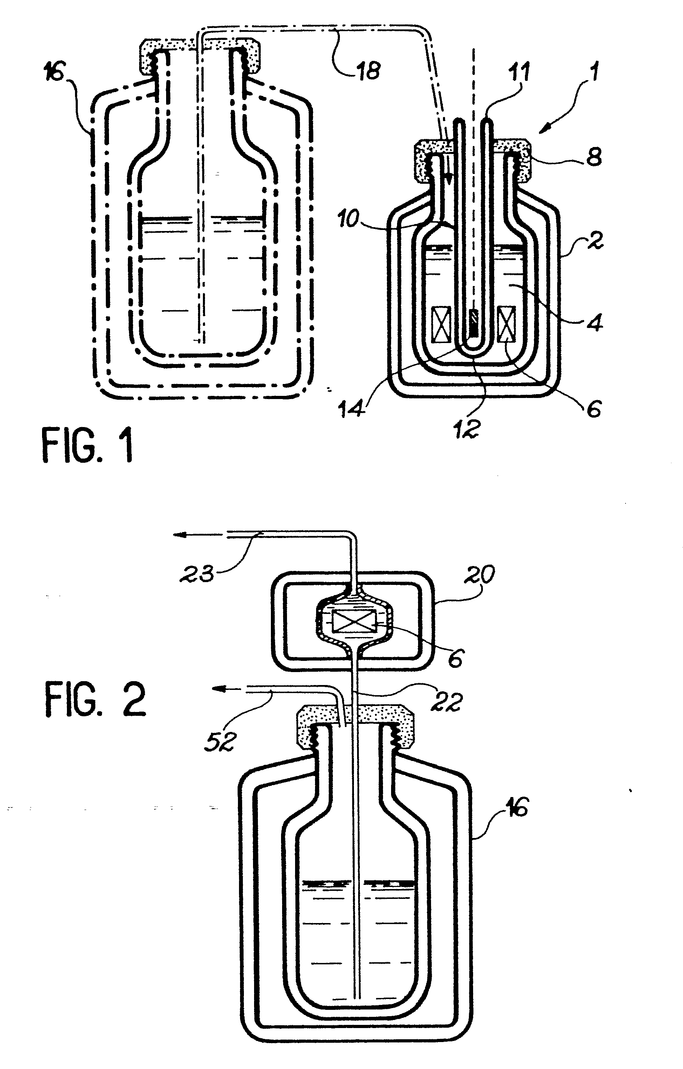

La figure 1 représente schématiquement un tel dispositif, portant la référence générale 1, et qui se compose d'un récipient isolé thermiquement 2 à double enveloppe entre lesquelles on a fait le vide et à l'intérieur duquel se trouve une masse d'hélium liquide 4 dans laquelle baigne le dispositif utilisé 6. Celui-ci peut être, par exemple, une bobine supraconductrice ou un capteur de mesure. Le cryostat 2 est fermé à sa partie supérieure par un bouchon 8 à travers lequel passe éventuellement un tube cylindrique creux 10. Dans ce cas, ce dernier a l'une de ses extrémités 11 ouverte à l'air libre, à l'extérieur du cryostat 2, tandis que l'autre extrémité 12 est fermée et se trouve plongée dans la masse d'hélium liquide 4. Les parois du tube 10 sont multiples afin d'assurer une bonne isolation. L'échantillon à étudier 14 est introduit à l'intérieur du tube 10 jusqu'au fond de celui-ci à un endroit où il est dans le champ magnétique créé par la bobine supraconductrice 6, ou dans la zone de mesure du capteur 6.

Dans les appareils de l'art antérieur comme celui illustré à la figure 1, le dispositif 6 doit être placé à l'intérieur d'une masse d'hélium liquide de volume assez important pour assurer une autonomie de fonctionnement suffisante. A la mise en service, le cryostat 2 est rempli d'hélium liquide à partir d'un réservoir 16, qui peut être une bouteille de type connu et disponible dans le commerce, représenté schématiquement en traits mixtes sur la figure et qui est relié au cryostat 2 par une canalisation 18 représentée également en traits mixtes. Le réservoir 16 et la canalisation 18 sont retirés une fois que le récipient 2 est rempli.

Ce type d'appareil présente deux inconvénients principaux : tout d'abord, étant donné qu'il faut des appareils de grande capacité pour avoir une autonomie suffisante et qu'il est nécessaire de construire un type d'appareil spécialisé pour chaque application, la réalisation de tels appareils est très coûteuse. D'autre part, lors de la mise en service, le transfert d'hélium liquide du réservoir 16 dans le cryostat 2 est une opération délicate qui entraîne des pertes importantes d'hélium.

La présente invention a justement pour but d'éliminer ces inconvénients grâce à un procédé et à un appareil qui permettent d'obtenir de façon aisée, à la demande, l'environnement du dispositif 6 à basse température par l'utilisation d'un matériel simple, peu coûteux et limitant les pertes de gaz liquéfié.

Plus précisément, l'invention a pour objet un procédé de mise en température d'un dispositif placé dans un cryostat caractérisé en ce qu'à la demande, pendant un temps déterminé, ledit dispositif est mis en contact avec un gaz liquéfié provenant d'une source de gaz liquéfié qui, après utilisation, retourne dans ladite source.

Selon un mode de mise en oeuvre préférentiel, on fait baigner le dispositif, entre deux périodes d'utilisation, dans la vapeur froide du gaz liquéfié. De préférence, le gaz liquéfié est l'hélium liquide.

L'invention a aussi pour objet un appareil pour le maintien, à la demande, d'un dispositif, connu en soi, à basse température caractérisé en ce qu'il comporte :

- une source de gaz liquéfié ;
- un cryostat, surmontant ladite source, contenant ledit dispositif, et
- un moyen constitué d'une ligne de transfert à faibles pertes assurant, à la demande, le transfert contrôlé d'au moins une partie du gaz liquéfié entre la source et le cryostat.

Selon une autre caractéristique, l'appareil est pourvu d'un régulateur de niveau.

Selon un premier mode de réalisation, la source de gaz liquéfié est constituée par un deuxième cryostat.

Selon un deuxième mode de réalisation, la source de gaz liquéfié est constituée par un liquéfacteur.

Selon une réalisation préférentielle, le gaz liquéfié est de l'hélium liquide.

Il est à noter que,pour transférer le gaz liquéfié, l'emploi d'une ligne de transfert à très faibles pertes qui peut, éventuellement, être solidaire du cryostat est essentiel.

Ainsi, selon l'invention, on sépare les fonctions de stockage et de maintien au froid, ce qui permet de confier la première à un cryostat du commerce performant et peu coûteux. La quantité de gaz liquéfié nécessaire pour le maintien en froid du dispositif est ainsi minimisée, ce qui permet d'utiliser un cryostat de faibles dimensions (adaptées à celles du dispositif 6) et d'un coût minimum.

Le transfert du gaz liquéfié de la source vers le cryostat se fait en continu et automatiquement, par l'intermédiaire d'une ligne de transfert à très faibles pertes. On fait ensuite redescendre le gaz liquéfié contenu dans le cryostat vers la source, dans les périodes de non-utilisation, ce qui permet de minimiser la consommation. Durant ce temps, le dispositif baigne dans les vapeurs de gaz liquéfié, ce qui le maintient à basse température. En effet dans le cas de l'utilisation d'hélium liquide, du fait de l'utilisation d'un récipient isolé et d'une ligne de transfert à faibles pertes, la vapeur d'hélium dans le cryostat est à une température de l'ordre de 20 K.

Dans la suite de la présente description relative à l'utilisation d'hélium liquide, l'expression "basse température" désignera des températures de l'ordre de 20 K par opposition aux "très basses températures" auxquelles se trouve le liquide. Le fait de maintenir le cryostat à 20 K pendant les périodes de non-utilisation permet de le refroidir très rapidement au moment voulu, et donc de limiter encore les pertes d'hélium par évaporation.

L'invention apparaîtra mieux à la lecture de la description qui va suivre, donnée à titre purement illustratif et nullement limitatif, en référence aux dessins annexés, dans lesquels :

- la figure 1, déjà décrite, est une vue schématique en coupe verticale d'un appareil de l'art antérieur,

- la figure 2 est une vue schématique en coupe d'un appareil conforme à l'invention, et

- la figure 3 est une vue schématique en coupe verticale d'un mode particulier de réalisation de l'appareil objet de l'invention.

On voit sur la figure 2 que le dispositif 6, au lieu de se trouver dans un récipient de grandes dimensions comme dans le cas de la figure 1, se trouve au contraire dans un cryostat 20 de volume beaucoup plus réduit et relié à une source de gaz liquéfié, constituée par un réservoir 16, par l'intermédiaire d'une canalisation 22. Le réservoir 16, qui assure la fonction de stockage du froid, est avantageusement un réservoir d'un type connu et disponible dans le commerce tel que celui représenté en traits mixtes sur la figure 1 et c'est pourquoi il porte le même numéro de référence. Le cryostat 20 qui assure le maintien en froid pendant les périodes d'utilisation est relié par une canalisation 23 à un dispositif non représenté qui permet de faire monter l'hélium liquide du réservoir 16 dans le cryostat 20 ou de refouler le liquide dans le réservoir 16. Le dispositif 6 ne se trouve baigné dans l'hélium liquide qu'au moment des mesures, l'hélium étant stocké dans la bouteille 16 pendant les périodes de non-utilisation. La canalisation 52 est la sortie des vapeurs d'hélium s'échappant du cryostat de stockage. De préférence, ces vapeurs sont récupérées.

Cette façon de faire présente plusieurs avantages : en premier lieu, à la mise en service du dispositif, on branche directement le cryostat 20 sur le réservoir 16, ce qui supprime l'étape préliminaire de transvasement décrite en référence à la figure 1 et qui est grosse consommatrice d'hélium liquide. D'autre part, le réservoir 16 est de préférence une bouteille disponible dans le commerce et produite en grandes quantités, donc peu coûteuse, et le cryostat 20 peut être de petite taille, ce qui diminue son coût de fabrication. Enfin, le dispositif 6 peut être placé à demeure, c'est-à-dire emprisonné dans le crysotat 20, ce qui simplifie la conception de ce dernier et permet de limiter la consommation d'hélium liquide. Bien entendu, la canalisation 22 doit constituer une ligne de transfert à très faibles pertes : c'est pourquoi elle est de dimensions réduites, possède un écran thermique refroidi par les vapeurs froides en provenance du réservoir de stockage, qui est lui-même utilisé dans les conditions normales de stockage, c'est-à-dire que les vapeurs froides sont aussi utilisées pour refroidir ses propres écrans et son col.

Avantageusement, pendant les périodes de non-utilisation du dispositif 6, on peut ramener toute la masse d'hélium liquide, qui est minimale, dans le réservoir 16, mais laisser dans le cryostat 20 une atmosphère de vapeur d'hélium issue du réservoir. Les vapeurs d'hélium se trouvent à basse température, c'est-à-dire de l'ordre de 20 K, ce qui permet d'amener rapidement le cryostat 20 à des températures très basses (de l'ordre de 4 K) avant de commencer le travail. Enfin, dans certains cas, les petites dimensions du cryostat 20 permettent de l'utiliser dans des endroits difficiles d'accès où un appareil encombrant tel que le cryostat 2 de la figure 1 ne pourrait pas être utilisé.

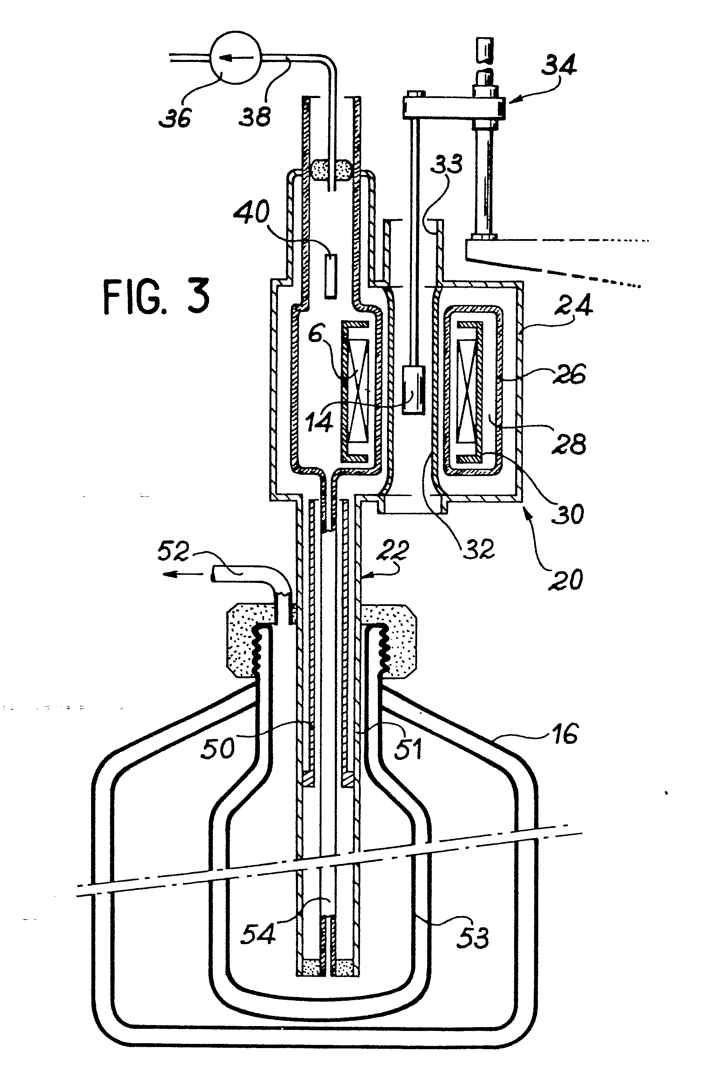

La figure 3 représente un mode particulier de réalisation de l'appareil objet de l'invention. Il s'agit d'un exemple tiré du domaine de la géophysique, utilisé pour des mesures d'aimantation rémanente d'échantillons de roches. On retrouve le réservoir 16 relié au cryostat 20 par l'intermédiaire de la canalisation 22. Le cryostat 20 se compose essentiellement d'une chambre de forme torique 28 contenant le dispositif de mesure 6 destiné à recevoir l'hélium liquide. Ce dispositif est un capteur triaxial à SQUID accompagné de 3 transformateurs de flux triaxiaux et protégé par un écran supraconducteur 30. Les parois 26 du cryostat sont classiquement composées d'un vide d'isolement et d'une superisolation. La chambre torique 28 est solidaire de la canalisation 22 et plus précisément du conduit 54, constituant une ligne de transfert à faibles pertes qui permet d'amener l'hélium liquide au contact du capteur 6. Celle-ci comporte un écran de rayonnement thermique cylindrique 50, porté à une température intermédiaire (80 K) grâce à un échangeur 51, placé dans le col du vase de stockage, solidaire de la ligne et utilisant les vapeurs froides. Elle comporte plusieurs couches de superisolant.

Les vapeurs circulant dans le col du vase de stockage, passant d'une température de l'ordre de 4K à une température de l'ordre de 300K, refroidissent les parois 51 et 53 aux environs de 80K, de manière isotherme.

Le tube 54, dans lequel passe l'hélium liquide, est ainsi protégé du rayonnement à 300K. L'espace compris entre la paroi interne de la ligne 22 et l'écran 50 et l'espace compris entre la paroi intérieure de la ligne 22 et la paroi extérieure de la conduite du fluide 54 sont sous vide et communiquent avec l'enceinte formée par le blindage 24 qui, bien entendu, est aussi sous vide.

Entre les écrans et les espaces vides sont prévues de manière classique, des couches de superisolants. Le cryostat 20 est protégé magnétiquement par un blindage 24, sensiblement cylindrique et pourvu d'un passage central 33 correspondant au passage central 32 du cryostat 20. Un mécanisme d'insertion 34 permet d'introduire l'échantillon à étudier 14, par les passages 32 et 33, dans la zone de mesure du capteur 6. Une pompe 36 sert à faire monter l'hélium liquide venant du réservoir 16 vers le cryostat 20. Cette pompe 36 est installée sur une canalisation 38 à la base de laquelle une jauge 40 permet de détecter la présence du liquide au-dessus du capteur 6, ce qui permet de réguler son niveau. La montée du liquide pourra être assurée par tout autre moyen tel que par exemple surpression dans le récipient de stockage, pompe de circulation chaude ou froide, etc...

Ainsi, le procédé et l'appareil objets de l'invention présentent des avantages particulièrement intéressants puisqu'il suffit de construire un cryostat de petite taille, donc d'un coût et d'un volume de liquide minimaux, relié à un réservoir du commerce qui est également peu coûteux. D'autre part, puisque l'hélium liquide se trouve entièrement enfermé dans ce réservoir pendant les périodes de non-utilisation, on limite la consommation d'hélium qui est un produit cher. Enfin, le fait de maintenir le capteur dans une atmosphère de vapeur d'hélium issue du réservoir pendant les périodes de non-utilisation permet de le maintenir à basse température pendant ces périodes-là et donc d'atteindre rapidement la température désirée de 4 K lorsqu'on fait monter le niveau d'hélium liquide au moment de l'utilisation, la ligne de très faibles pertes étant, elle aussi, maintenue froide.

Enfin, il est bien entendu que l'invention ne se limite pas aux seuls modes de réalisation qui viennent d'être décrits, mais qu'on peut envisager des variantes sans sortir pour autant du cadre de l'invention. Par exemple, l'homme de l'art adaptera la forme et les dimensions de l'appareil en fonction de chaque cas particulier. L'appareil selon l'invention permet notamment de réaliser des capteurs intégrés, c'est-à-dire placés à demeure lors de la construction du cryos-

B 7776.3 JR

tat. Enfin, si on a décrit des dispositifs dans lesquels la source d'hélium liquide était constituée par un simple réservoir, c'est-à-dire une bouteille disponible dans le commerce, on peut tout aussi bien remplacer ce réservoir par un appareil de liquéfaction.

Dans les exemples décrits ci-dessus le gaz liquéfié était l'hélium ; bien évidemment d'autres gaz liquéfiés, hydrogène par exemple, pourraient être utilisés lorsqu'il n'est pas nécessaire de travailler à très basse température.

B 7776.3  JR

REVENDICATIONS

1. Procédé de mise en température d'un dispositif (6) placé dans un cryostat (20) caractérisé en ce qu'à la demande, pendant un temps déterminé, ledit dispositif (6) est mis en contact avec un gaz liquéfié provenant d'une source de gaz liquéfié (16) et qui, après utilisation, retourne dans ladite source (16).

2. Procédé de mise en température suivant la revendication 1, caractérisé en ce qu'on fait baigner le dispositif (6), entre deux périodes d'utilisation, dans la vapeur froide du gaz liquéfié.

3. Procédé de mise en température suivant l'une quelconque des revendications 1 et 2, caractérisé en ce que le gaz liquéfié est de l'hélium.

4. Appareil pour la mise en température, à la demande, d'un dispositif (6) connu en soi, caractérisé en ce qu'il comporte :
- une source de gaz liquéfié (16),
- un cryostat (20) surmontant ladite source, contenant ledit dispositif (6), et
- un moyen (22), constitué d'une ligne de transfert à faibles pertes, et assurant, à la demande, le transfert contrôlé d'au moins une partie du gaz liquéfié entre la source (16) et le cryostat (20).

5. Appareil selon la revendication 4, caractérisé en ce qu'il comporte un régulateur de niveau (40).

6. Appareil selon l'une quelconque des revendications 4 et 5, caractérisé en ce que la source de gaz liquéfié (16) est un cryostat.

7. Appareil selon l'une quelconque des revendications 4 et 5, caractérisé en ce que la source de gaz liquéfié est un liquéfacteur.

8. Appareil selon l'une quelconque des revendications 4 à 7, caractérisé en ce que le moyen de transfert (22) est solidaire du cryostat (20).

9. Appareil selon l'une quelconque des revendications 4 à 8, caractérisé en ce que le dispositif (6) est emprisonné dans le cryostat (20).

10. Appareil selon l'une quelconque des revendications 4 à 9, caractérisé en ce que le gaz liquéfié est de l'hélium liquide.

B 7776.3   JR

FIG. 1

FIG. 2

FIG. 3

Office européen
des brevets

**RAPPORT DE RECHERCHE EUROPEENNE**

Numéro de la demande

EP  83 40 2515

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | US-A-3 358 472  (KLIPPING)<br><br>* Colonne  4, ligne 26 - colonne 7, ligne 68; figures 1,2 *<br><br>--- | 1-4,6, 8-10 | F 25 D    3/10<br>F 17 C    3/08  //<br>G 01 R   33/12 |
| A | US-A-3 271 966  (WEBB)<br><br>* Colonne  1, ligne 51 - colonne 2, ligne 65; figures 1,2 *<br><br>--- | 1,4-6, 8,9 | |
| A | GB-A-1 321 675  (RANK ORGANISATION)<br>* Page  1, ligne  16  - page 2, ligne 93; figures 1,2 *<br><br>--- | 1 | |
| A | GB-A-1 034 092 (MAX-PLANCK-GESELLSCHAFT ZUR FÖRDERUNG DER WISSENSCHAFTEN E.V.)<br>* Page  2, ligne  34  - page 3, ligne 65; figure *<br><br>--- | 1-4,6 8-10 | DOMAINES TECHNIQUES RECHERCHES (Int. Cl. ³) |
| A | GB-A-  971 102 (MAX-PLANCK-GESELLSCHAFT ZUR FÖRDERUNG DER WISSENSCHAFTEN E.V.)<br>* Page  2, ligne  125 - page 3, ligne 123; figures 1-3 *<br><br>--- | 1-4,6, 8-10 | F 25 D<br>F 17 C<br>G 01 R |
| A | FR-A-2 308 068  (ANVAR)<br>* Page  3, ligne  22  - page 6, ligne 8; figures 1-4 *<br><br>---          -/- | 5 | |

| Le présent rapport de recherche a été établi pour toutes les revendications | | |
|---|---|---|
| Lieu de la recherche<br>LA HAYE | Date d'achèvement de la recherche<br>04-04-1984 | Examinateur<br>BOETS A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

Office européen
des brevets

## RAPPORT DE RECHERCHE EUROPEENNE

EP 83 40 2515

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | FR-A-2 394 040 (SOCIETE D'ETUDES D'AUTOMATISATION, DE REGULATION ET D'APPAREILS DE MESURES) | | |
| A | US-A-3 353 365 (CHUBB) | | |
| A | FR-A-2 282 609 (VACUUM BARRIER) | | |
| A | US-A-3 025 680 (DE BROSSE) | | |
| A | DE-A-2 409 933 (KEMMER) | | |
| | | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAYE | 04-04-1984 | BOETS A.F.J. |